# EUROPEAN PATENT APPLICATION

(11) **EP 1 757 409 A1**
(43) Date of publication of application: **28.02.2007**
(21) Application number: 05734327.9
(22) Date of filing: 06.04.2005
(51) Int. Cl.: B25J 5/00, B62D 55/10, E02F 9/02, E02F 3/815

(54) **SELF-PROPELLED ROBOT FOR THE HANDLING OF EXPLOSIVE CHARGES**

(30) Priority: 06.04.2004 ES 200400849 P
(71) Applicant: Proyectos y Tecnologia Sallen, S.L., 22500 Binefar (Huesca) (ES)
(72) Inventor: SALLEN ROSELLÓ, César, E-22500 Binefar (Huesca) (ES); SALLEN ROSELLÓ, Alfredo, E-22500 Binefar (Huesca) (ES); TORRES PUEO, Roberto, E-22500 Binefar_(Huesca) (ES)
(74) Representative: Ungria Lopez, Javier
(86) International application number: PCT/ES2005/000183
(87) International publication number: WO 2005/097432

(57) **Abstract**

The invention relates to a self-propelled robot which is used to handle explosive charges and which is of the type that is remote controlled by means of a control console. The inventive robot can be used to handle explosive devices and charges as well as perform special, dangerous operations. According to the invention, the self-propelled robot (1) comprises movement means which are defined by two lateral caterpillar running gears (2) having adjustable running sides, with an adjustable-length scraper (3) being disposed at the rear thereof. The invention also comprises an articulated arm (4) having a first segment (7) which takes the form of a fork that is actuated by a pair of cylinders (6) and which terminates in a clamp (5).

## Description

### OBJECT OF THE INVENTION

As stated in the title of this specification, the following invention relates to a self-propelled robot for the handling of explosive charges and which is of the type that is remotely controlled by means of a control console, being of use for handling explosive charges and, in general, for performing special, dangerous operations, such that the self-propelled robot comprises means of movement which are defined by a caterpillar track, one on each side, adjustable in their proximity and which are driven by a diesel, gasoline or electric motor, incorporating an adjustable-length scraper in its front part, and which likewise presents an articulated arm consisting of four segments and a clamp on its end provided with independent movement, left and right.

In this way, both of the caterpillar sides of the running gear are adjustable in relation to each other, in such a way that when heavy loads have to be handled the two sets of running gear will be able to be displaced towards the outside, thus obtaining perfect stability and presenting great strength and power, and, moreover, the scraper will be able to be adapted to the separation length of the caterpillars tracks.

Likewise, with the aim of facilitating all the operations to be performed by the self-propelled robot, it includes a series of viewing cameras and proximity sensors.

Moreover, the four segments making up the articulated arm are actuated by respective cylinders and the clamp has specific means of rotation, left and right, in order to provide it with great manoeuvrability.

In addition, the first segment of the articulated arm, namely, the one mounted on the chassis, displays a general form of a fork, with the clamp body passing through its prongs, permitting the arm to fold upon itself and thereby occupy minimum space.

### FIELD OF APPLICATION

The present specification describes a self-propelled robot remotely controlled by means of a control console, having application for performing a range of dangerous operations, being of special application for the handling of explosive devices and charges.

### PRIOR ART OF THE INVENTION

Conventionally, when explosive devices have to be handled or risky operations have to be performed, and even more so when human lives are at risk, robots are used which are operated remotely by means of a control console.

In this way, among robots existing for the handling of explosive devices, we can cite the kind which include an articulated arm, with a single segment, and without any possibility of rotating in a horizontal plane, in other words, it only has movement in a vertical plane and is limited by its single articulated segment.

Likewise, this type of robot has a series of control elements, as are viewing cameras and proximity sensors.

Equally, we can Spanish invention patent P200302384, from the same inventor as this present specification, in which a self-propelled robot is presented with means of movement defined by two sets of side wheels and two independent motors, each of which transmits movement to a set of side wheels, in such a way that not all the wheels have the same diameter, which grants less strength to the inventive robot.

### DESCRIPTION OF THE INVENTION

The present specification describes a self-propelled robot for the handling of explosive charges and which is of the type that is remotely controlled by means of an operating and control console, being of special use for the handling of explosive charges and devices and for performing special, dangerous operations in general, such that the self-propelled robot comprises means of movement which are defined by a caterpillar track, with running sides adjustable in relation to each other, being powered by a diesel, gasoline or electric motor, incorporating an adjustable-length scraper in its front part, and which presents an articulated arm defined by four segments, the first segment having the general form of a fork, and terminating at its end with a clamp provided with specific rotary movement.

So, in the operation of handling heavy loads the caterpillar running gear on both sides will be displaced by means of the corresponding hydraulic cylinders, directed by some guides towards the outside, granting it great stability.

Likewise, the adjustable-length scraper actuated by a cylinder in its up and down movement presents a rotary arm on both sides, with a first position withdrawn on the scraper, its length being adapted to the withdrawn running gear and with a second position aligned thereto, its length being adjusted to the extended running gear.

Moreover, the first segment relative to the articulated arm presents the form of a fork and is actuated by a pair of cylinders.

In this way, when the articulated arm is folded upon itself, the clamp body passes between the pair of prongs of the first segment, thereby occupying minimum space.

Indeed, the self-propelled robot presents great robustness and is endowed with great manoeuvrability, being able to haul and handle heavy loads.

So, as the running gear is defined by a caterpillar track, this permits its displacement over all kinds of uneven terrain, having great mobility, and perfect grip on all kinds of ground.

In order to complement the description that is going to be made, and with the aim of aiding a better understanding of the characteristics of the invention, this specification is accompanied by a set of drawings containing figures in which, on an illustrative rather than limiting basis, the most characteristic details of the invention are represented.

### BRIEF DESCRIPTION OF THE DESIGNS

Figure 1. Shows a lateral elevation view of the inventive self-propelled robot, in which can be seen the articulated arm in its extended position, along with the displacement caterpillar for and the forward scraper.
Figure 2. Shows a lateral elevation view of the inventive self-propelled robot, in which can be seen the articulated arm in its folded position, along with the displacement caterpillar and the forward scraper.
Figure 3. Shows a plan view of the gripping clamp in its closed and open position, said clamp having a specific rotary movement left and right.
Figure 4. Shows a plan view of the inventive self-propelled robot, in which can be seen the caterpillars relative to the running gear in its withdrawn position, along with the adjustable-length scraper actuated by a cylinder.
Figure 5. Shows a plan view of the inventive self-propelled robot, in which can be seen the caterpillars relative to the running gear in its extended position, along with the adjustable-length scraper actuated by a cylinder.

### DESCRIPTION OF A PREFERRED EMBODIMENT

With the commented figures in view and in accordance with the numbering adopted, we can see how the self-propelled robot 1 for the handling of explosive devices and charges displays means of displacement defined by two sets of lateral caterpillar running gear 2 driven by conventional means, such as a diesel, gasoline or electric motor, and incorporating a scraper 3 in its front part, along with an articulated arm 4 terminating in a clamp 5.

An important characteristic of the self-propelled robot 1 is that it displays great robustness which permits it to haul and handle heavy loads and likewise, via its running gear, based on a caterpillar track 2, it can displace itself over all kinds of uneven terrain, having great mobility.

Moreover, with the aim of providing the robot 1 with great stability in the handling of heavy loads, the two sets of lateral caterpillar running gear 2 are mounted on a structure which permits separation between both sides by means of operating a simple push-button, in such a way that, when heavy loads have to be handled, the sides of the caterpillar 2 will be separated and the robot 1 will acquire great stability, thus representing a major advantage.

So, the caterpillar sides 2 are mounted by means of a pair of telescopic cross-members 8, in such a way that by means of the respective hydraulic cylinder 9, activated by means of an activation push-button, they will be able to be positioned at different distances from each other.

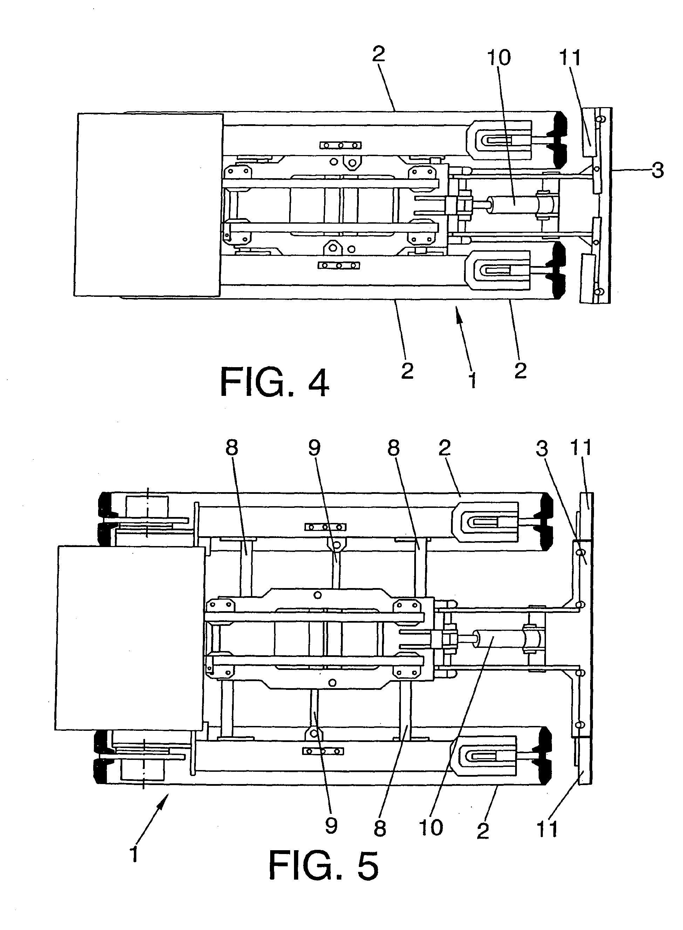

Also, the scraper 3, actuated by a cylinder 10 in its up and down movement, presents an adjustable length, for which it has individual rotary arms 11 at each end permitting it to adapt its length to that of the running gear, depending on whether it is in its withdrawn or extended position, as can be appreciated in figures 4 and 5 of the designs.

Said rotary arms will be actuated by means of respective cylinders.

Furthermore, the articulated arm 4 mounts the corresponding hydraulic cylinders of the different segments thereof, so that the first segment 7 is actuated by a pair of cylinders 6, for which it incorporates a hydraulic unit, while in order to effect the rotary movements to left and right of the clamp 5 it incorporates an electric motor, in such a way that the articulated movements of the four segments making up the articulated arm 4 are materialised by corresponding actuation cylinders, which have independent action.

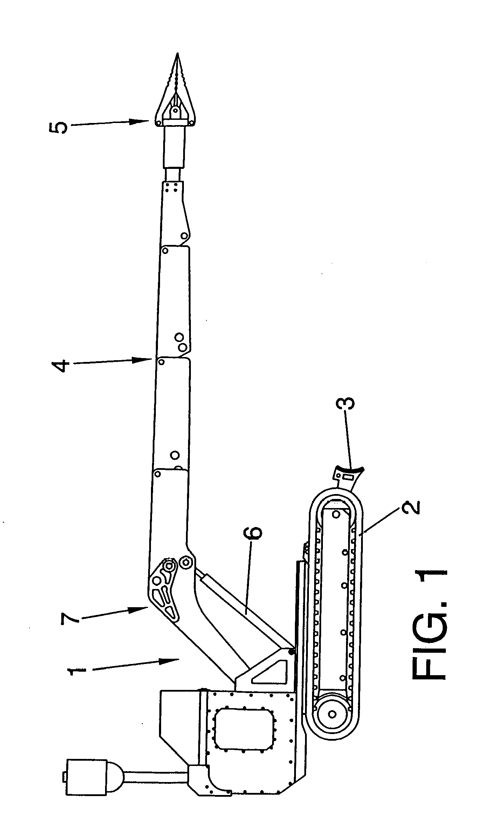

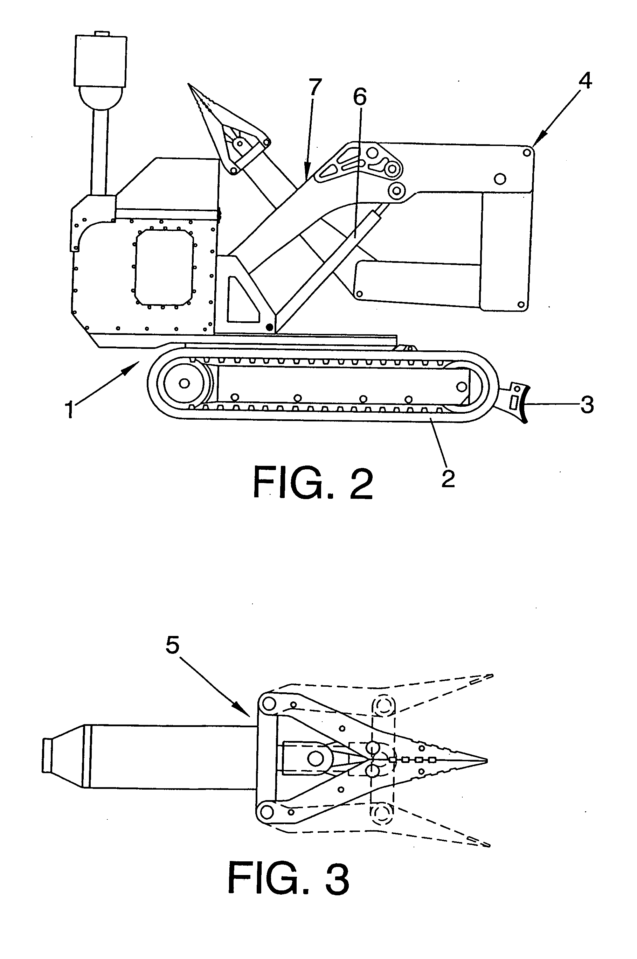

In the figures of the designs, the great manoeuvrability of the articulated arm 4 can be seen, and it can be observed how it passes from its extended position (figure 1) to a position of being folded on itself (figure 2), thereby occupying minimum space.

This is achieved as a consequence of presenting the first segment 7 of the articulated arm in the form of a fork with the clamp 5 being able to pass between its two prongs as it folds (figure 2).

Of course, the self-propelled robot 1 incorporates the corresponding control electronics with all incidents appearing on a screen in the control console.

Likewise, the self-propelled robot 1 will incorporate a series of ultrasound distance meters and viewing cameras, permitting all necessary operations to be performed.

Moreover, the clamp 5 can present different characteristics depending on the work to be carried out, and so the clamps can cut, haul, lift and even destroy objects.

## Claims

1. SELF-PROPELLED ROBOT FOR THE HANDLING OF EXPLOSIVE CHARGES, being of the type of self-propelled robot that is remotely controlled by means of a control console, of use for handling explosive charges and devices, as well as for performing special, dangerous operations, **characterised in that** the self-propelled robot (1) comprises means of movement which are defined by two lateral caterpillar running gears (2) having adjustable running sides, with an adjustable-length scraper (3) being disposed at the front thereof, along with an articulated arm (4) having a first segment (7) of the arm (4) in the form of a fork that is actuated by a pair of cylinders (6) and which terminates in a clamp (5).

2. SELF-PROPELLED ROBOT FOR THE HANDLING OF EXPLOSIVE CHARGES, according to claim 1, **characterised in that** in the operation of handling heavy loads the running sides of the caterpillar (2) will be displaced by means of the action of the corresponding hydraulic cylinder (9), directed by some cross-members (8) for mounting ands guided.

3. SELF-PROPELLED ROBOT FOR THE HANDLING OF EXPLOSIVE CHARGES, according to claim 1, **characterised in that** the first segment (7) relative to the articulated arm (4) presents the form of a fork and is actuated by a pair of cylinders (6).

4. SELF-PROPELLED ROBOT FOR THE HANDLING OF EXPLOSIVE CHARGES, according to claims 1 and 3, **characterised in that** in the folding of the articulated arm (4) on itself, the clamp body (5) passes between the pair of prongs of the first segment (7).

5. SELF-PROPELLED ROBOT FOR THE HANDLING OF EXPLOSIVE CHARGES, according to claim 1, **characterised in that** the adjustable-length scraper (3) actuated by a cylinder (10) presents a rotary arm (11) on both sides, with a first position withdrawn on the scraper and a second position aligned with the same.
